# EUROPEAN PATENT APPLICATION

(11) **EP 4 792 654 A1**
(43) Date of publication of application: **19.08.2026**
(21) Application number: 25425005.3
(22) Date of filing: 18.02.2025
(51) Int. Cl.: A23B 7/005, A23B 7/10, A23B 7/154, A23L 19/00, A23L 19/20

(54) **PROCESSING METHOD FOR OLIVES IN BAGS, AND PRODUCT OBTAINED BY THIS METHOD**

(30) Priority: 17.02.2025 IT 202500003036
(71) Applicant: F.LLI Sacla' S.p.A., 10129 Torino (IT)
(72) Inventor: ERCOLE, Chiara, 10129 Torino (IT); FINOCCHI, Anna Piera, 10129 Torino (IT)
(74) Representative: Savoca, Agatino

(57) **Abstract**

A process for processing olives comprises the steps of immersing a quantity of olives in boiling water for 3 minutes, the water being acidified with citric acid and maintained at a pH between 3.5 and 4; cooling the olives with water; preparing a preserving liquid in the form of an aqueous solution comprising citric acid at 0.5 per thousand, ascorbic acid at 1.5 per thousand, and lactic acid in a proportion such as to maintain the pH of the liquid between 3.5 and 3.8; pouring into at least one plastic bag for food use a predetermined quantity of olives thus treated and a predetermined quantity of preserving liquid thus obtained; and sealing the bag, obtaining a bagged olive packaging.

## Description

### Technical field

The present invention generally relates to the food sector; in particular, the invention relates to a process for processing olives in bags and to a bagged olive packaging obtained with such process.

### Summary of the invention

The production process according to the invention aims to extend the shelf life of table olives packaged in pouches (for example, in plastic pouches of the type known as "doypack"), in order to obtain a product with chemical-physical and organoleptic characteristics similar to those of olives preserved in the traditional glass jar.

The marketing of olives in flexible plastic containers, such as "doypack" pouches, stored at room temperature, presents a critical issue related to the limited shelf life of the product.

The absence of a microbiological stabilization process through pasteurization makes it necessary to resort to alternative solutions, often based on increasing the acidity and salinity of the preserving liquid by adding lactic acid and salt.

However, while this approach ensures the microbiological safety of the product, it negatively affects the sensory profile, making it less pleasant to the palate, and may have an adverse impact on consumers' health due to the high salt content.

The process according to the present invention provides for a partial sanitization of microorganisms through a combined process of blanching in boiling water, cooling, and packaging with the addition of a calibrated preserving liquid.

This sanitization, which can be defined as "partial," is distinguished by its selective approach to microbial flora. While ensuring the elimination of pathogenic microbial loads through the application of specific parameters of time, temperature, and characteristics of the preserving liquid, the process preserves a fraction of yeasts and lactobacilli.

This strategic choice allows the product to remain "alive," while at the same time hindering the proliferation of spoilage microorganisms that would compromise its quality.

In summary, the process according to the invention is characterized by a targeted balance between food safety and the maintenance of desirable organoleptic characteristics, achieved through a partial sanitization that modulates the presence of specific microorganisms.

For the implementation of the process, it is preferable to use a rotating cooker, suitable for maintaining the chemical-physical characteristics of the product constant during the blanching process, ensuring uniform treatment and precise temperature control.

It is also advisable to ensure a continuous and optimized flow between the various stages of the process, avoiding interruptions or accumulations (buffering) that could compromise product quality and production efficiency.

The process includes the addition of an antioxidant, such as ascorbic acid, added to the preserving liquid to prevent oxidation and preserve the freshness and natural colour of the olives, maintaining their organoleptic qualities unaltered.

In light of an accurate selection of the most suitable olive cultivar for pitting, the variety known as "Hojiblanca" has proven preferable for the implementation of the process according to the invention. This variety is distinguished by its firm and compact fruit, particularly suitable for such processing, ensuring a high-quality final product.

The aforementioned and other purposes and advantages are achieved, according to an aspect of the invention, by a process for processing olives in bags and a product obtained with such process, having the characteristics defined in the annexed claims.

### Brief description of the drawings

The functional and structural characteristics of some preferred embodiments of a process for processing olives in bags according to the invention will now be described. Reference is made to the accompanying drawing, which represents a schematic diagram of a process for processing olives, according to an embodiment of the present invention.

### Detailed description

Before explaining in detail a plurality of embodiments of the invention, it should be clarified that the invention is not limited in its application to the constructive details and the configuration of the components presented in the following description or illustrated in the drawings. The invention can assume other embodiments and be implemented or realized practically in different ways. It should also be understood that the phraseology and terminology are intended for descriptive purposes and should not be construed as limiting.

A process for processing olives according to the present invention comprises the steps of:
a) providing a predetermined quantity of olives;
b) immersing said quantity of olives in boiling water for 3 minutes, the water being acidified with citric acid and maintained at a pH between 3.5 and 4;
c) extracting the olives from the acidified boiling water and cooling them with water;
d) providing a preserving liquid, in the form of an aqueous solution comprising:
   - citric acid in a proportion of 0.5 per thousand by weight;
   - ascorbic acid in a proportion of 1.5 per thousand by weight; and
   - lactic acid in a proportion such as to maintain the pH of the liquid between 3.5 and 3.8;
e) providing one or more plastic bags for food use;
f) pouring into at least one of said bags a predetermined quantity of olives processed according to steps b) and c) and a predetermined quantity of the preserving liquid obtained in step d); and
g) sealing the bag, obtaining a bagged olive packaging.

According to one embodiment, the aforementioned cooling step c) is carried out by pouring drinking water in a shower-like manner onto the olives, the olives being preferably collected in appropriate tanks wherein the water (already present and/or collected from the above-mentioned showered water) is maintained at a temperature below 40°C.

Preferably, the aforementioned step b) (also referred to in the present description as the "blanching step") is preceded by a washing step with water.

This washing step can be carried out using a rotating washer with shower-type drinking water dispensing.

According to a preferred embodiment, the blanching step b) is carried out using a rotating cooker.

A step may be included wherein a tank containing replenishment acidified water is provided, adapted to be added to the acidified water wherein the olives are immersed during step b) to maintain its pH between 3.5 and 4.

Preferably, during step b), the pH of the acidified water is checked every 30 minutes.

According to one embodiment, steps d) and/or e) are carried out while maintaining the preserving liquid at a temperature below 40°C.

According to a preferred embodiment, step a) is carried out by providing a quantity of Hojiblanca variety olives.

According to a preferred embodiment, step e) is carried out by providing plastic bags of the doypack type.

According to one aspect of the invention, a bagged olive packaging is obtained with a processing procedure according to any of the embodiments described above.

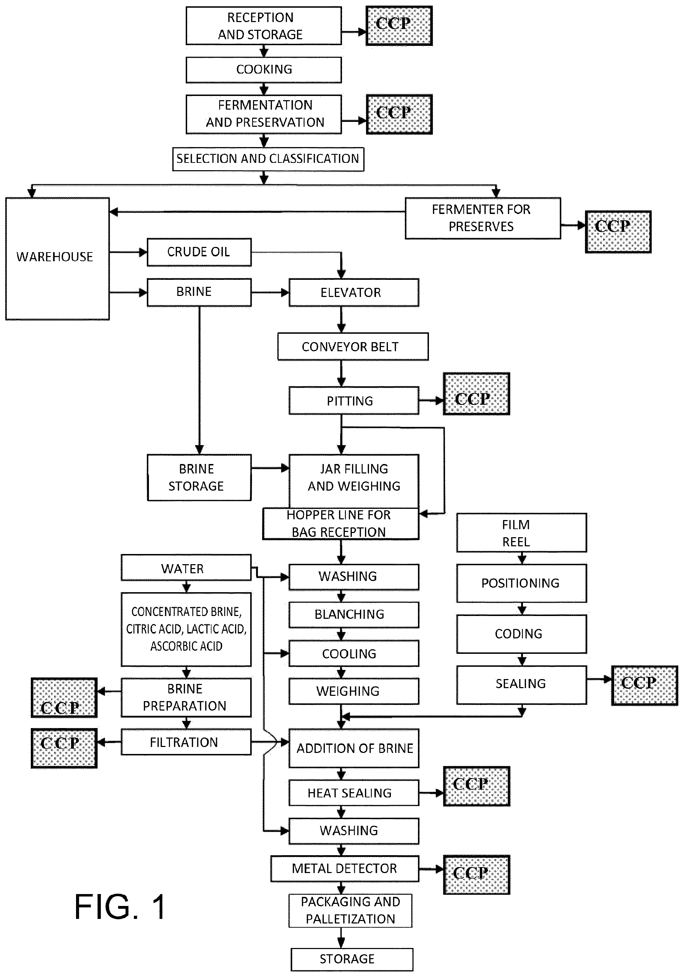

By way of example, referring to Figure 1, a process according to one embodiment of the invention includes a step of harvesting and fermenting a quantity of olives, its storage and subsequent transport and pre-treatment with pitting and weighing, then in succession the steps of washing, blanching in acidified boiling water, cooling, and bagging with the addition of the preserving brine, up to the packaging and storage of the packages. One or more of these steps may constitute critical control points ("CCP" in the figure), preferably to be monitored to ensure the correct implementation of the process.

The advantage achieved is obtaining a product in plastic packaging which, while boasting a significantly longer shelf life compared to other products packaged in plastic bags, nevertheless maintains chemical-physical and organoleptic characteristics similar to those of olives preserved in the traditional glass jar.

Various aspects and embodiments of a process for processing olives in bags, and a bagged olive packaging obtained with such process, have been described according to the invention. It is understood that each embodiment may be combined with any other embodiment. Furthermore, the invention is not limited to the described embodiments but may be modified within the scope defined by the annexed claims.

## Claims

1. A process for processing olives, comprising the steps of:
a) providing a predetermined quantity of olives;
b) immersing said quantity of olives in boiling water for 3 minutes, the water being acidified with citric acid and maintained at a pH between 3.5 and 4;
c) extracting the olives from the acidified boiling water and cooling them with water;
d) providing a preserving liquid, in the form of an aqueous solution comprising:
- citric acid in a proportion of 0.5 per thousand by weight;
- ascorbic acid in a proportion of 1.5 per thousand by weight;
- lactic acid in a proportion such as to maintain the pH of the liquid between 3.5 and 3.8;
e) preparing one or more plastic bags for food use;
f) pouring into at least one of said bags a predetermined quantity of olives treated according to steps b) and c) and a predetermined quantity of the preserving liquid obtained in step d); and
g) sealing the bag, obtaining a bagged olive packaging.

2. The process according to claim 1, wherein step c) of cooling is carried out by pouring drinking water in a shower-like manner onto the olives, the olives being collected in appropriate tanks wherein the water is maintained at a temperature below 40°C.

3. The process according to claim 1 or 2, wherein step b) is preceded by a washing step with water.

4. The process according to claim 3, wherein the washing step is carried out using a rotating washer with shower-type drinking water dispensing.

5. The process according to any one of the preceding claims, wherein step b) is carried out using a rotating cooker.

6. The process according to any of the preceding claims, comprising the step of preparing a tank containing replenishment acidified water, suitable for being added to the acidified water wherein the olives are immersed, to maintain the pH of the latter between 3.5 and 4.

7. The process according to any of the preceding claims, wherein during step b) the pH of the acidified water is checked every 30 minutes.

8. The process according to any of the preceding claims, wherein step d) and/or e) is carried out while maintaining the preserving liquid at a temperature below 40°C.

9. The process according to any of the preceding claims, wherein step a) is carried out by providing a quantity of Hojiblanca variety olives.

10. The process according to any of the preceding claims, wherein step e) is carried out by preparing plastic bags of the doypack type.

11. A bagged olive packaging obtained with a processing procedure according to any of the preceding claims.
